(19) Europäisches Patentamt
European Patent Office
Office européen des brevets

(11) **EP 4 700 964 A1**

(12) **EUROPEAN PATENT APPLICATION**
published in accordance with Art. 153(4) EPC

(43) Date of publication:
**25.02.2026 Bulletin 2026/09**

(21) Application number: **24792564.7**

(22) Date of filing: **09.04.2024**

(51) International Patent Classification (IPC):
**H01M 50/463** (2021.01)      **H01M 10/052** (2010.01)

(52) Cooperative Patent Classification (CPC):
**Y02E 60/10**

(86) International application number:
**PCT/JP2024/014396**

(87) International publication number:
**WO 2024/219289 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023  JP 2023069435**

(71) Applicant: **PANASONIC INTELLECTUAL PROPERTY MANAGEMENT CO., LTD.
Kadoma-shi, Osaka 571-0057 (JP)**

(72) Inventors:
• **UTSUMIYA, Kazutoshi**
  **Kadoma-shi, Osaka 571-0057 (JP)**
• **URATA, Sho**
  **Kadoma-shi, Osaka 571-0057 (JP)**

(74) Representative: **Eisenführ Speiser Patentanwälte Rechtsanwälte PartGmbB
Gollierstraße 4
80339 München (DE)**

(54) **NONAQUEOUS-ELECTROLYTE SECONDARY BATTERY AND SEPARATOR FOR NONAQUEOUS-ELECTROLYTE SECONDARY BATTERY**

(57)     A disclosed nonaqueous electrolyte secondary battery includes: a positive electrode; a negative electrode; a separator provided between the positive electrode and the negative electrode; and a nonaqueous electrolyte. The negative electrode is a negative electrode in which a metal that contains at least one selected from the group consisting of lithium and sodium deposits during charging and dissolves during discharging. The separator (50) includes a substrate (51) and a spacer (52) formed on the substrate (51). The spacer (52) includes a protrusion (52a) and a brim portion (52b) that is provided at an outer edge portion of the protrusion (52a) and thinner than the protrusion (52a).

FIG. 1B

## Description

[Technical Field]

The present disclosure relates to a nonaqueous electrolyte secondary battery and a separator for a nonaqueous electrolyte secondary battery.

[Background Art]

A lithium secondary battery (lithium metal secondary battery) is known as one type of nonaqueous electrolyte secondary battery. In the lithium secondary battery, a lithium metal deposits on the negative electrode during charging, and the lithium metal dissolves into the nonaqueous electrolyte during discharging. Various proposals have been conventionally made for lithium secondary batteries.

PTL 1 (Japanese Laid-Open Patent Publication No. 2020-077497) discloses, in claim 1, "a separator used for a nonaqueous electrolyte battery including: a substrate; and a pattern that has a convex shape and is provided on at least one side of the substrate, wherein the pattern includes: end regions provided on opposing ends of the convex shape in a plane direction; and a central region provided across the opposing end regions, the end regions each include a top portion that protrudes in a thickness direction perpendicular to the plane direction and is provided at a boundary with the central region, and the central region includes a concave portion that has a thickness smaller than that of the top portions".

[Citation List]

[Patent Literature]

PTL 1: Japanese Laid-Open Patent Publication No. 2020-077497

[Summary of Invention]

[Technical Problem]

Currently, further improvement for the characteristics of nonaqueous electrolyte secondary batteries is required. It is an object of the present disclosure to provide a nonaqueous electrolyte secondary battery that has a high level of cycle characteristics.

[Solution to Problem]

One aspect of the present disclosure relates to a nonaqueous electrolyte secondary battery. The nonaqueous electrolyte secondary battery includes: a positive electrode; a negative electrode; a separator provided between the positive electrode and the negative electrode; and a nonaqueous electrolyte. The negative electrode is a negative electrode in which a metal that contains at least one selected from the group consisting of lithium and sodium deposits during charging and dissolves during discharging. The separator includes a substrate and a spacer formed on the substrate. The spacer includes a protrusion and a brim portion that is provided at an outer edge portion of the protrusion and thinner than the protrusion.

Another aspect of the present disclosure relates to separator. The separator is a separator for a nonaqueous electrolyte secondary battery. The separator includes: a substrate; and a spacer formed on the substrate. The spacer includes a protrusion and a brim portion that is provided at an outer edge portion of the protrusion and thinner than the protrusion.

[Advantageous Effects of Invention]

According to the present disclosure, it is possible to obtain a nonaqueous electrolyte secondary battery that has a high level of cycle characteristics.

Novel features of the present invention are set forth in the appended claims. However, the present invention will be well understood from the following detailed description of the present invention with reference to the drawings, in terms of both the configuration and the content together with other objects and features of the present invention.

[Brief Description of Drawings]

FIG. 1A is a top view schematically showing one example of a separator according to Embodiment 1.

FIG. 1B is a cross-sectional view schematically showing a portion of the separator shown in FIG. 1A.

FIG. 2 is a top view schematically showing another example of the separator according to Embodiment 1.

FIG. 3 is a top view schematically showing another example of the separator according to Embodiment 1.

FIG. 4A is a cross-sectional view schematically showing one example of a process of producing the separator according to Embodiment 1.

FIG. 4B is a cross-sectional view schematically showing one example of a process performed subsequent to the process shown in FIG. 4A.

FIG. 5 is a vertical cross-sectional view schematically showing one example of a nonaqueous electrolyte secondary battery according to Embodiment 2.

FIG. 6 is a cross-sectional view schematically showing a portion of the lithium secondary battery shown in FIG. 5.

[Description of Embodiments]

Hereinafter, an embodiment of the present disclosure will be described by way of examples. However, the embodiment of the present disclosure is not limited to the examples described below. In the following description, specific numerical values and materials may be listed as examples. However, other numerical values and materials may also be used as long as the invention of the present disclosure can be carried out. In the specification of the present application, the expression "a range of a numerical value A to a numerical value B" encompasses the range including the numerical value A and the numerical value B, and can also be interpreted as "a numerical value A or more and a numerical value B or less". In the following description, when lower and upper limits of numerical values of specific physical properties, conditions, and the like are shown as examples, any of the lower limits and any of the upper limits can be combined in any way as long as the lower limits are not greater than or equal to the upper limits.

(Nonaqueous Electrolyte Secondary Battery)

Hereinafter, a nonaqueous electrolyte secondary battery according to the present embodiment may also be referred to as "nonaqueous electrolyte secondary battery (B)" or "secondary battery (B)". The secondary battery (B) includes: a positive electrode; a negative electrode; a separator provided between the positive electrode and the negative electrode; and a nonaqueous electrolyte. The negative electrode is a negative electrode in which a metal that contains at least one selected from the group consisting of lithium and sodium deposits during charging and dissolves during discharging. The separator includes a substrate and a spacer formed on the substrate. The spacer includes a protrusion and a brim portion that is provided at an outer edge portion of the protrusion and thinner than the protrusion.

Conventionally, when a negative electrode in which a metal (a negative electrode active material) deposits during charging is used, a spacer is used to ensure a space for the metal to deposit. In the secondary battery (B), the spacer ensures a space between the positive electrode and the negative electrode. For this reason, it is possible to reduce expansion of the electrode group when the battery is repeatedly charged and discharged. As a result, it is possible to reduce a deterioration of cycle characteristics or the like. When the electrode group expands, it may lead to a deterioration of the cycle characteristics due to breakage of the electrode plates or the like.

The inventors of the present application newly found, as a result of studies, that there is a case in which a separator that includes a spacer deteriorates. When a negative electrode in which a metal (a negative electrode active material) deposits and dissolves during charging and discharging is used, the separator deforms due to the charging and discharging. When a separator that includes a substrate and a spacer formed on the substrate deforms, a large force is applied to the substrate at corners of a lower end portion of the spacer. As a result, the substrate in contact with the corners becomes thin, which makes it likely to cause a micro short circuit. The micro short circuit leads to a deterioration of battery characteristics (for example, cycle characteristics).

As a result of further studies, the inventors of the present application newly found that, by using a spacer that includes a brim portion, the deterioration of the substrate caused by the spacer can be reduced. The present disclosure is based on this new finding.

The metal that deposits during charging may contain lithium. The metal that deposits during charging may be a lithium metal. The lithium metal may contain a trace amount of other metal elements, and may be a lithium alloy.

A lithium secondary battery in which a lithium metal deposits on the negative electrode during charging is also called a lithium metal secondary battery. In the negative electrode of the lithium secondary battery, the lithium metal deposits during charging and the lithium metal dissolves during discharging. The negative electrode includes at least a negative electrode current collector, and the lithium metal deposits on the negative electrode current collector. Hereinafter, a lithium secondary battery that is used as the secondary battery (B) may also be referred to as "lithium secondary battery (LB)".

In the lithium secondary battery (LB), for example, 70% or more of the rated capacity is exhibited by deposition and dissolution of the lithium metal. Migration of electrons in the negative electrode during charging and during discharging is mainly caused by deposition and dissolution of the lithium metal in the negative electrode. Specifically, 70 to 100% (for example, 80 to 100% or 90 to 100%) of migration of electrons (electric current from another perspective) in the negative electrode during charging and during discharging is caused by deposition and dissolution of the lithium metal. That is, the negative electrode included in the lithium secondary battery (LB) is different from a negative electrode in which migration of electrons in the negative electrode during charging and during discharging is mainly caused by absorption and desorption of lithium ions by the negative electrode active material (graphite or the like).

The brim portion is formed to be joined to an outer edge portion of the protrusion. The brim portion is preferably formed substantially around the entire outer edge portion of the protrusion. For example, when the protrusion is a linear protrusion, the brim portion is preferably formed on opposing sides of the linear protrusion in the width direction. When the protrusion is a dot-shaped protrusion, the brim portion is preferably formed around the entire outer periphery of the dot-shaped protrusion. The brim portion preferably accounts for 70% or more, 80% or more, 90% or more, or 95% or more of the outer edge portion of the protrusion.

The brim portion may have a width Wf of 1 $\mu$m or more, 5 $\mu$m or more, or 10 $\mu$m or more, and 40 $\mu$m or less, or 20 $\mu$m or less. The width Wf of the brim portion may also be in a range of 1 $\mu$m to 40 $\mu$m (for example, in a range of 5 $\mu$m to 20 $\mu$m). The protrusion may have a width Wc of 100 $\mu$m or more, or 500 $\mu$m or more, and 5000 $\mu$m or less, or 1000 $\mu$m or less. The width Wc of the protrusion may also be in a range of 100 $\mu$m to 5000 $\mu$m (for example, in a range of 500 $\mu$m to 1000 $\mu$m).

A ratio Wf/Wc of the width Wf of the brim portion relative to the width Wc of the protrusion may be 0.001 or more, 0.006 or more, 0.02 or more, or 0.08 or more. The ratio Wf/Wc may also be 0.6 or less, 0.4 or less, 0.12 or less, or 0.08 or less. The ratio Wf/Wc may also be in a range of 0.001 to 0.4 (for example, in a range of 0.006 to 0.12 or a range of 0.006 to 0.08). By setting the ratio Wf/Wc to 0.001 or more, the deterioration of the separator can be particularly reduced. By setting the ratio Wf/Wc to 0.4 or less, the reduction in liquid or ion permeability can be reduced.

The brim portion may have an average height Hf of 0.5 $\mu$m or more, 1 $\mu$m or more, or 2 $\mu$m or more, and 10 $\mu$m or less, or 5 $\mu$m or less. The average height Hf of the brim portion may also be in a range of 0.5 $\mu$m to 10 $\mu$m (for example, in a range of 1 $\mu$m to 5 $\mu$m).

The protrusion may have an average height Hc of 10 $\mu$m or more, or 20 $\mu$m or more, and 100 $\mu$m or less, 50 $\mu$m or less, 40 $\mu$m or less, or 30 $\mu$m or less. The protrusion height may also be configured to be substantially uniform over the entire separator such that a spacing between electrode plates formed by the spacer is substantially uniform.

A ratio Hf/Hc of the average height Hf of the brim portion relative to the average height Hc of the protrusion may be 0.005 or more, 0.01 or more, or 0.05 or more, and may also be 0.25 or less, or 0.15 or less. The ratio Hf/Hc may also be in a range of 0.005 to 0.25 (for example, in a range of 0.01 to 0.15).

The average height of one brim portion can be determined from a cross-sectional image of the brim portion. Specifically, the average height of one brim portion can be determined by measuring, on the image, a cross-sectional area of the brim portion and a base length of the brim portion and dividing the cross-sectional area by the base length. The average height Hf of the brim portion can be determined by obtaining average height from each of cross-sectional images of arbitrarily selected twenty or more (for example, twenty) brim portions, and then arithmetically averaging the obtained average heights of the twenty or more brim portions.

The height of one protrusion can be determined by measuring, in a cross-sectional image of the spacer, the height of the highest portion of the protrusion. The average height Hc of the protrusion can be determined by obtaining protrusion height from each of cross-sectional images of arbitrarily selected twenty or more (for example, twenty) protrusions, and then arithmetically averaging the obtained heights of the twenty or more protrusions.

The brim portion may be configured to become thinner as it gets farther away from the protrusion. With this configuration, damage to the substrate caused by the corners of the protrusion can be particularly reduced. The brim portion may also be formed to have a substantially uniform thickness.

A ratio Sa/Ss of an area Ss of the spacer relative to an area Sa of one of two main surfaces of the substrate of the separator on which the spacer is formed may also be 0.001 or more, or 0.01 or more, and may be 0.25 or less, 0.10 or less, or 0.05 or less. By setting the ratio Sa/Ss to 0.25 or less, the disadvantages caused by a portion occupied by the spacer becoming too large can be reduced.

The material for the protrusion and the material for the brim portion may be the same or different. By using the same material for the protrusion and the brim portion, the adhesion between the brim portion and the protrusion can be increased. The protrusion and the brim portion may contain the same resin. The protrusion and the brim portion may contain the same resin and the same filler.

As long as the above-described separator is used, there is no particular limitation on the method for producing the secondary battery (B). The secondary battery (B) may be produced using the same production method as a known production method. The secondary battery (B) can be produced by enclosing, in an outer casing, an electrode group that includes a positive electrode, a negative electrode, and a separator, and a nonaqueous electrolyte.

(Separator)

Hereinafter, the separator according to the present embodiment may also be referred to as "separator (S)". The separator (S) is a separator for a nonaqueous electrolyte secondary battery. The separator (S) includes a substrate and a spacer formed on the substrate. The spacer includes a protrusion and a brim portion that is provided at an outer edge portion of the protrusion and thinner than the protrusion.

As the separator (S), a separator described as the separator of the secondary battery (B) can be used. The matters described in the description of the separator of the secondary battery (B) can be applied to the separator (S), and thus a redundant description may be omitted. The separator (S) can be used as the separator of the secondary battery (B). The matters described in the description of the separator (S) may be applied to the separator of the secondary battery (B).

(Spacer)

The spacer may contain a resin (for example, an insulating resin), or may contain a resin and a filler. The spacer may be constituted of a resin alone, or a resin and a filler.

Examples of the resin material include a fluorine-containing resin (polyvinylidene fluoride (PVdF), polytetrafluoroethylene, and the like), a fluorine-containing rubber (a vinylidene fluoride-tetrafluoroethylene copolymer, an ethylene-tetrafluoroethylene copolymer, and the like), a rubber (a styrene-butadiene copolymer, a hydride thereof, an acrylonitrile-butadiene copolymer, a hydride thereof, a methacrylic acid ester-acrylic acid ester copolymer, a styrene-acrylic acid ester copolymer, an acrylonitrile-acrylic acid ester copolymer, an ethylene propylene rubber, a polyvinyl alcohol, a polyvinyl acetate, and the like), a cellulose derivative (ethyl cellulose, methyl cellulose, hydroxyethyl cellulose, carboxymethyl cellulose, and the like), an acrylic resin (an acrylic acid-methalic acid copolymer and the like), a polyphenylene ether, a polysulfone, a polyethersulfone, polyphenylene sulfide, polyetherimide, a polyimides, a polyamide (a wholly aromatic polyamide (aramid), and the like), a polyamide imide, polyacrylonitrile, polyvinyl alcohol, a polyether, polyacrylic acid, polymethalic acid, a polyester, a polyolefin, a silicone resin, a urethane resin, a melamine resin, a urea resin, an epoxy resin, and the like.

The spacer has a resin content Cr of 10 vol% or more, 30 vol% or more, 40 vol% or more, or 50 vol% or more, and 100 vol% or less, 90 vol% or less, 80 vol% or less, or 60 vol% or less. By setting the resin content Cr to 30 vol% or more, the deformation of the spacer caused by compression can be reduced.

There is no particular limitation on the filler contained in the spacer. The filler may be an insulating filler. The filler may be an inorganic filler, an organic filler, or a mixture of an inorganic filler and an organic filler. Examples of the material for the filler include an oxide, a nitride, a carbide, and the like. Examples of the oxide include aluminum oxide (alumina), magnesium oxide, titanium oxide, zirconium oxide, silicon oxide, and the like. Examples of the nitride include silicon nitride, aluminum nitride, titanium nitride, and the like. Examples of the carbide include silicon carbide and the like.

The filler may have a spherical shape or a shape other than the spherical shape. The filler may have, although not particularly limited, an average particle size of 0.1 μm or more, or 0.5 μm or more, and 10 μm or less, 5 μm or less, or 2 μm or less. The average particle size can be measured using the following method. First, a cross section of the spacer is captured using an electron microscope to obtain a cross-sectional image of the spacer. Next, the obtained image is subjected to image processing such as binarization to specify particle portions. Next, the diameter (equivalent circle diameter) of a circle that has the same area as the cross-sectional area of each particle portion is determined, and the arithmetic average of the determined equivalent circle diameters is defined as the average particle size. The arithmetic average can be determined from, for example, twenty particles. The average particle size of other particles contained in the electrode plates and the separator can also be determined in the same manner.

The spacer may be formed on one of two main surfaces of the substrate that is on the positive electrode side or the negative electrode side. When the spacer is formed on the main surface of the substrate that is on the positive electrode side, the substrate deforms significantly due to deposition of the metal (the negative electrode active material) during charging. For this reason, the technique of the present disclosure is preferably used particularly when the spacer is formed on the main surface of the substrate that is on the positive electrode side.

There is no particular limitation on the shape of the protrusion included in the spacer as long as the protrusion can be formed in the above-described at least one region. The protrusion may include at least one selected from the group consisting of a linear protrusion and a dot-shaped protrusion.

The spacer may include linear protrusions arranged in a mesh pattern. The mesh pattern may be a combined pattern of polygons (a triangle, a square, and a hexagon, and the like). For example, the mesh pattern may be a honeycomb pattern. The spacer may include a plurality of linear protrusions arranged in a stripe pattern. The spacer may include a plurality of dot-shaped protrusions arranged regularly at constant intervals.

There is no particular limitation on a cross-sectional shape of the linear protrusions (a cross section of the linear protrusions taken perpendicular to a direction in which the linear protrusions extend). The cross-sectional shape of the linear protrusions may be rectangular, trapezoidal, or semicircular.

The spacer may have a non-porous structure that does not allow ions (for example, lithium ions) of the metal that is used as the negative electrode active material to pass therethrough. Such a spacer can be achieved by forming the spacer under a condition that does not make the spacer porous. There is no particular limitation on the method for forming the non-porous structure spacer, and a known method may be used. For example, the non-porous structure spacer may be formed by printing, on the separator, an ink that contains the material for the spacer. The expression "not allow lithium ions to pass through" used in the specification of the present application means that an amount of lithium ions that does not affect the battery characteristics and the battery shape does not pass through the spacer, and thus encompasses the case where an amount of lithium ions that can be deemed as not substantially pass through the spacer migrates in the spacer.

(Substrate)

As the substrate, a sheet that can be used as a separator for a nonaqueous electrolyte secondary battery is used. The substrate may be constituted of a substrate layer alone. Alternatively, the substrate may include a substrate layer and a composite material layer formed on the substrate layer. The composite material layer contains a polymer and inorganic particles. When the substrate includes a substrate layer and a composite material layer, the separator may be provided such that the composite material layer faces the positive electrode, or the composite material layer faces the negative electrode. When the substrate includes a substrate layer and a composite material layer, the spacer may be formed on the substrate layer or the composite material layer. By forming the spacer on the composite material layer, the effect of reducing thermal contraction of the substrate layer can be particularly enhanced.

The substrate layer contracts when the temperature of the electrode group that includes the positive electrode, the negative electrode, and the separator increases excessively. Due to the contraction of the substrate layer, a short circuit is likely to occur between the positive electrode and the negative electrode, which is likely to cause the temperature of the electrode group to increase even more. By stacking the composite material layer on the substrate layer, the contraction of the substrate layer when the temperature of the electrode group increases can be reduced. As a result, a further increase in the temperature of the electrode group can be reduced.

As the substrate layer, an ion-permeable and insulating porous sheet is used. Examples of the porous sheet include a porous film, a woven fabric, and a non-woven fabric. There is no particular limitation on the material for the separator, but a polymer material may be used. Examples of the polymer material include a polyolefin resin, a polyamide resin, and a cellulose. Examples of the polyolefin resin include polyethylene, polypropylene, a copolymer of ethylene and propylene. The substrate layer may contain an additive, where appropriate. As the additive, an inorganic filler or the like may be used. As the substrate layer, a sheet used as a separator for a nonaqueous electrolyte secondary battery (for example, a lithium secondary battery) may also be used.

The composite material layer contains a polymer (hereinafter also referred to as "polymer (PL)") and inorganic particles. The inorganic particles may include first particles and/or second particles. The first particles are lithium-containing phosphate particles. The second particles are particles other than the first particles. The composite material layer is a layer that allows lithium ions to pass therethrough.

The phosphate that constitutes the first particles may be at least one selected from the group consisting of lithium phosphate ($Li_3PO_4$), dilithium hydrogen phosphate ($Li_2HPO_4$), and lithium dihydrogen phosphate ($LiH_2PO_4$). Out of these, it is preferable to use lithium phosphate because the effect of reducing heat generation in the battery in the event of an abnormality occurring in the battery is high.

One preferred example of the second particles (inorganic particles) is particles made of an insulating inorganic compound that does not melt or decompose in the event of overheating of the battery. As the second particles, inorganic particles ordinarily used as an inorganic filler may be used. Examples of the material for the second particles include aluminum oxide, boehmite, talc, titanium oxide, magnesium oxide, and silicon oxide.

As the polymer (PL), it is preferable to use a polymer that has a higher level of heat resistance than the main component of the substrate layer of the separator. The polymer (PL) may contain at least one selected from the group consisting of an aromatic polyamide, an aromatic polyimide, and an aromatic polyamide imide. These are known as high heat resistant polymers. From the viewpoint of heat resistance, it is preferable to use an aramid (a wholly aromatic polyamide).

The inorganic particles may include first particles and second particles other than phosphate particles as described above. In this case, the composite material layer may include a first layer that contains the first particles and a second layer that contains the second particles. With this configuration, the effect of reducing an excessive increase in the temperature of the electrode group can be particularly enhanced. The composite material layer may be constituted of the first layer alone or the second layer alone.

The first layer and the second layer may be stacked on one of two main surfaces of the substrate layer that is on the positive electrode side or the negative electrode side, or a different main surface. For example, the separator and the spacer may have any of the following stacked structures: a stacked structure in which the substrate layer, the first layer, the second layer, and the spacer are stacked in this order; a stacked structure in which the substrate layer, the second layer, the first layer, and the spacer are stacked in this order; a stacked structure in which the first layer, the second layer, the substrate layer, and the spacer are stacked in this order; and a stacked structure in which the second layer, the first layer, the substrate layer, and the spacer are stacked in this order. Alternatively, the first layer and the second layer may be provided on different main surfaces of the substrate layer. For example, the separator and the spacer may have a stacked structure in which the first layer, the substrate layer, the second layer, and the spacer are stacked in this order, or a stacked structure in which the second layer, the substrate layer, the first layer, and the spacer are stacked in this order.

There is no particular limitation on the thickness of the substrate. The thickness of the separator may be 5 $\mu$m or more, or 10 $\mu$m or more, and may be 50 $\mu$m or less, or 40 $\mu$m or less. When the substrate includes a substrate layer and a composite material layer, the thickness of the substrate layer may be 5 $\mu$m or more, or 10 $\mu$m or more, and may be 50 $\mu$m or less, or 40 $\mu$m or less.

(Method for Producing Separator (S))

The separator (S) can be produced by forming the spacer on a substrate. There is no particular limitation on the method for forming the spacer. The brim portion and the protrusion may be formed simultaneously or separately. As will be described below, the brim portion and the protrusion may be unitarily formed.

Each of the brim portion and the protrusion may be formed by applying a coating liquid and then drying the coating liquid. The coating liquid can be prepared by mixing a component of the brim portion or the protrusion and a liquid medium (a dispersion medium). There is no particular limitation on the liquid medium used to form the coating liquid. Examples of the liquid medium include an organic solvent (N-methyl-2-pyrrolidone or the like). The coating liquid may be applied using a dispenser or the like, or a known printing method such as gravure printing, inkjet printing, or screen printing. Also, the coating liquid may be dried using a known method such as drying by heat or natural drying.

One example of a method for forming the spacer will be described below. The method for forming the spacer includes steps (i) and (ii). In the step (i), a first layer, which will be formed into a brim portion and a bottom portion of a protrusion, is formed on a substrate. In the step (ii), a second layer, which will be formed into a portion of the protrusion other than the bottom portion, is formed on the first layer. The first and second layers can be formed by, for example, applying a coating liquid on the substrate and drying the coating liquid.

Another example of the method for forming the spacer will be described below. In this method for forming the spacer, first, either one of the brim portion and the protrusion is formed, and after that, the other one of the brim portion and the protrusion is formed. In this way, the spacer can be formed.

When the substrate includes a substrate layer and a composite material layer, the substrate may be produced using the following method. First, a substrate layer is prepared. As the substrate layer, a commercially available substrate layer may be used. Next, a composite material layer is formed on the substrate layer.

There is no particular limitation on the method for forming the composite material layer. The composite material layer may be formed using the following method. First, a coating liquid is prepared by mixing a component of the composite material layer and a liquid medium (a dispersion medium). Next, the prepared coating liquid is applied to the substrate layer to form a coating film, and then the coating film is dried. In this way, the composite material layer can be formed. There is no particular limitation on the liquid medium used to form the coating liquid. Examples of the liquid medium include an organic solvent (N-methyl-2-pyrrolidone or the like).

There is no particular limitation on the steps of the method for forming the composite material layer, and a known method can be used. For example, the coating liquid may be applied using a known method such as a method that uses a bar coater. Also, the composite material layer may be dried using a known method such as drying by heat or natural drying.

Hereinafter, examples of the constituent elements of the secondary battery (B) will be specifically described. The constituent elements described below are merely exemplary, and thus the constituent elements of the secondary battery (B) of the present embodiment are not limited to those described below. As constituent elements other than characteristic constituent elements of the secondary battery (B) of the present embodiment, known constituent elements may be used. Hereinafter, an example will be mainly described in which the secondary battery (B) is a lithium secondary battery (lithium secondary battery (LB)). When the secondary battery (B) is a battery other than the lithium secondary battery, constituent elements (a positive electrode, a negative electrode, a nonaqueous electrolyte, and the like) that are suitable for the battery may be used. The separator and the spacer were described above, and thus a redundant description thereof will be omitted.

There is no particular limitation on the shape of the secondary battery (B). Examples of the shape of the secondary battery (B) include a cylindrical shape, a coin shape, a prismatic shape, a sheet shape, and a flat shape.

The negative electrode is provided to face the positive electrode. The separator is provided between the positive electrode and the negative electrode. The positive electrode, the negative electrode, and the separator may be spirally wound, with the separator interposed between the positive electrode and the negative electrode. When forming a spirally wound-type electrode group, a strip-shaped positive electrode, a strip-shaped negative electrode, and a strip-shaped separator are used. Alternatively, the positive electrode, the negative electrode, and the separator may be stacked. For example, a flat positive electrode, a flat negative electrode, and a flat separator may be stacked. That is, the electrode group may be a spirally wound-type electrode group or a stacked-type electrode group.

(Negative Electrode)

The negative electrode includes a negative electrode current collector. In the lithium secondary battery (LB), a lithium metal deposits on the negative electrode current collector due to charging. More specifically, the lithium ions contained in the nonaqueous electrolyte receive electrons on the negative electrode current collector during charging, and transform into a lithium metal, and the lithium metal deposits on the negative electrode current collector. The lithium metal deposited on the negative electrode current collector dissolves into the nonaqueous electrolyte as lithium ions due to discharging. The lithium ions contained in the nonaqueous electrolyte may be either one or both of lithium ions derived from a lithium salt added to the nonaqueous electrolyte and lithium ions supplied from the positive electrode active material due to charging.

As the negative electrode current collector, a conductive sheet can be used. When the electrode group is a spirally wound-type electrode group, a strip-shaped conductive sheet is used. Examples of the conductive sheet include a conductive film, and a metal foil.

As the material for the negative electrode current collector (conductive sheet), a conductive material other than a lithium metal and a lithium alloy may be used. As the conductive material, a metal may also be used. The conductive material is preferably a material that is unreactive with lithium. The conductive material is preferably a material that does not form an alloy or an intermetallic compound with lithium. Examples of the conductive material include copper (Cu), nickel (Ni), iron (Fe), an alloy that contains any of these metal elements, and graphite whose basal planes are preferentially exposed. Examples of the alloy include a copper alloy, and stainless steel (SUS). As the conductive material, it is preferable to use copper and/or a copper alloy because they have a high level of conductivity. There is no particular limitation on the thickness of the negative electrode current collector, and the thickness of the negative electrode current collector may be in a range of 5 to 300 $\mu$m.

A negative electrode material mixture layer may be formed on a surface of the negative electrode current collector. The negative electrode material mixture layer is formed by, for example, applying a paste that contains a negative electrode active material such as graphite onto at least a portion of the surface of the negative electrode current collector. However, from the viewpoint of achieving a high capacity lithium secondary battery whose capacity is higher than that of a lithium ion battery, the thickness of the negative electrode material mixture layer is set to be sufficiently thin so that a lithium metal can deposit on the negative electrode.

The negative electrode may include a negative electrode current collector and a lithium metal or a lithium alloy in the form of a sheet provided on the negative electrode current collector. That is, a lithium metal-containing underlying layer (a layer made of a lithium metal or a lithium alloy) may be formed in advance on the negative electrode current collector. The lithium alloy may contain, in addition to lithium, an element such as aluminum, magnesium, indium, or zinc. By forming the underlying layer on the negative electrode current collector in advance to cause a lithium metal to deposit thereon during charging, deposition of dendrites can be more effectively reduced. There is no particular limitation on the thickness of the underlying layer, and the thickness of the underlying layer may be, for example, in a range of 5 $\mu$m to 25 $\mu$m.

(Positive Electrode)

The positive electrode may include a positive electrode current collector and a positive electrode material mixture layer supported on the positive electrode current collector. The positive electrode material mixture layer contains a positive electrode active material. The positive electrode material mixture layer may contain a positive electrode active material, a conductive material, and a binder. The positive electrode material mixture layer may be formed on only one or both sides of the positive electrode current collector. The positive electrode can be formed by, for example, applying a positive electrode material mixture slurry that contains a positive electrode active material, a conductive material, and a binder onto the positive electrode current collector, and drying the coating film, and then rolling the coating film.

The positive electrode active material is a material that absorbs and desorbs lithium ions. Examples of the positive electrode active material include a lithium-containing transition metal oxide, a transition metal fluoride, a polyanion, a fluorinated polyanion, and a transition metal sulfide. Out of these, it is preferable to use a lithium-containing transition metal oxide because the production cost is low and the average discharge voltage is high.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one or two or more transition metal elements. The transition metal element may be Co, Ni and/or Mn. The lithium-containing transition metal oxide may contain one or more representative elements where necessary. Examples of the representative element include Mg, Al, Ca, Zn, Ga, Ge, Sn, Sb, Pb, and Bi. The representative element may be Al or the like.

The conductive material is, for example, a carbon material. Examples of the carbon material include carbon blacks (acetylene black, ketjen black, and the like), carbon nanotubes, and graphites.

As the binder, for example, a fluorine resin, polyacrylonitrile, a polyimide resin, an acrylic resin, a polyolefin resin, a rubbery polymer, or the like is used. As the fluorine resin, polytetrafluoroethylene, polyvinylidene fluoride, or the like is used.

As the positive electrode current collector, a conductive sheet may be used. As the conductive sheet, a foil, a film, or the like is used. A carbon material may be applied onto a surface of the positive electrode current collector.

The material for the positive electrode current collector (conductive sheet) may be, for example, a metal material that contains Al, Ti, Fe, or the like. The metal material may be Al, an Al alloy, Ti, a Ti alloy, an Fe alloy, or the like. The Fe alloy may be stainless steel (SUS). There is no particular limitation on the thickness of the positive electrode current collector, and the thickness of the positive electrode current collector may be, for example, in a range of 5 to 300 $\mu$m.

(Nonaqueous Electrolyte)

A lithium ion-conductive nonaqueous electrolyte contains, for example, a nonaqueous solvent, and a lithium ion and an anion that are dissolved in the nonaqueous solvent. The nonaqueous electrolyte may be in the form of a liquid or a gel.

The nonaqueous electrolyte in the form of a liquid is prepared by dissolving a lithium salt in the nonaqueous solvent. By the lithium salt dissolving into the nonaqueous solvent, the lithium ion and the anion are generated.

The nonaqueous electrolyte in the form of a gel contains a lithium salt and a matrix polymer, or contains a lithium salt, a nonaqueous solvent, and a matrix polymer. As the matrix polymer, for example, a polymer material that absorbs the nonaqueous solvent and turns into a gel is used. Examples of the polymer material include a fluorine resin, an acrylic resin, and a polyether resin.

As the lithium salt and the anion, a known lithium salt and anion used in a nonaqueous electrolyte for a lithium secondary battery can be used. Specific examples include $BF_4^-$, $ClO_4^-$, $PF_6^-$, $CF_3SO_3^-$, $CF_3CO_2^-$, an imide anion, an oxalate complex anion, and the like. Examples of the imide anion include $N(SO_2CF_3)_2^-$ and $N(C_mF_{2m+1}SO_2)_x (C_nF_{2n+1}SO_2)_y^-$, where m and n each independently represent an integer of 0, 1 or more, x and y each independently represent 0, 1, or 2, and x and y satisfy x + y = 2. The oxalate complex anion may contain boron and/or phosphorus. Examples of the oxalate complex anion include a bis(oxalate)borate anion, $BF_2(C_2O_4)^-$, $PF_4(C_2O_4)^-$, and $PF_2(C_2O_4)_2^-$. The nonaqueous electrolyte may contain one or two or more types of these anions.

From the viewpoint of reducing the deposition of the lithium metal to form dendrites, the nonaqueous electrolyte preferably contains an oxalate complex anion. Due to interaction of the oxalate complex anion with lithium, a lithium metal is likely to deposit uniformly in the form of fine particles. For this reason, local deposition of the lithium metal can be easily reduced. The oxalate complex anion may be combined with a different type of anion. The different type of anion may be $PF_6^-$ and/or an imide anion.

The nonaqueous electrolyte may contain, as a solute (a lithium salt), $LiBF_2(C_2O_4)$ (lithium difluoro(oxalate) borate).

As the nonaqueous solvent, for example, an ester, an ether, a nitril, an amide, or a halogenated form thereof may be used. The nonaqueous electrolyte may contain one of these nonaqueous solvents, or two or more of these nonaqueous solvents. The halogenated form may be a fluoride or the like.

Examples of the ester include a carbonic ester, and a carboxylic ester. Example of a cyclic carbonic ester include ethylene carbonate, propylene carbonate, and fluoroethylene carbonate (FEC). Examples of a linear carbonic ester include dimethyl carbonate (DMC), ethyl methyl carbonate (EMC), and diethyl carbonate. Examples of a cyclic carboxylic ester include $\gamma$-butyrolactone, and $\gamma$-valerolactone. Examples of a linear carboxylic ester include ethyl acetate, methyl propionate, and methyl fluoropropionate.

The ether includes a cyclic ether and a linear ether. Examples of the cyclic ether include 1,3-dioxolane, 4-methyl-1,3-dioxolane, tetrahydrofuran, and 2-methyltetrahydrofuran. Examples of the linear ether include 1,2-dimethoxy ethane, diethyl ether, ethyl vinyl ether, methyl phenyl ether, benzyl ethyl ether, diphenyl ether, dibenzyl ether, 1,2-diethoxy ethane, and diethylene glycol dimethyl ether.

The concentration of the lithium salt in the nonaqueous electrolyte is, for example, 0.5 mol/L or more and 3.5 mol/L or less. The concentration of the anion in the nonaqueous electrolyte may be 0.5 mol/L or more and 3.5 mol/L or less. Also, the concentration of the oxalate complex anion in the nonaqueous electrolyte may be 0.05 mol/L or more and 1 mol/L or less.

The nonaqueous electrolyte may contain an additive. As the additive, an additive that forms a coating film on the negative electrode may be used. As a result of a coating film derived from the additive being formed on the negative electrode, the formation of dendrites is likely to be reduced. Examples of the additive include vinylene carbonate, FEC, and vinyl ethyl carbonate (VEC).

(Others)

The secondary battery (B) usually includes an outer casing that houses the electrode group and the nonaqueous electrolyte. There is no particular limitation on the outer casing, and a known outer casing can be used.

Hereinafter, an example of the separator (S) and the nonaqueous electrolyte secondary battery (B) according to the present embodiment will be specifically described with reference to the drawings. As the constituent elements of the example of the separator (S) and the nonaqueous electrolyte secondary battery (B) described below, the constituent elements described above can be used. Also, the constituent elements of the example of the separator (S) and the nonaqueous electrolyte secondary battery (B) described below can be changed based on the foregoing description. Also, the matters described in the following description may also be applied to the above-described embodiment. Also, in the separator and the secondary battery described below, the constituent elements that are not essential to the separator and the secondary battery of the present disclosure may be omitted. In the diagrams which will be referred to in the following description, for the sake of facilitating the understanding, the scale of the constituent elements is changed.

(Embodiment 1)

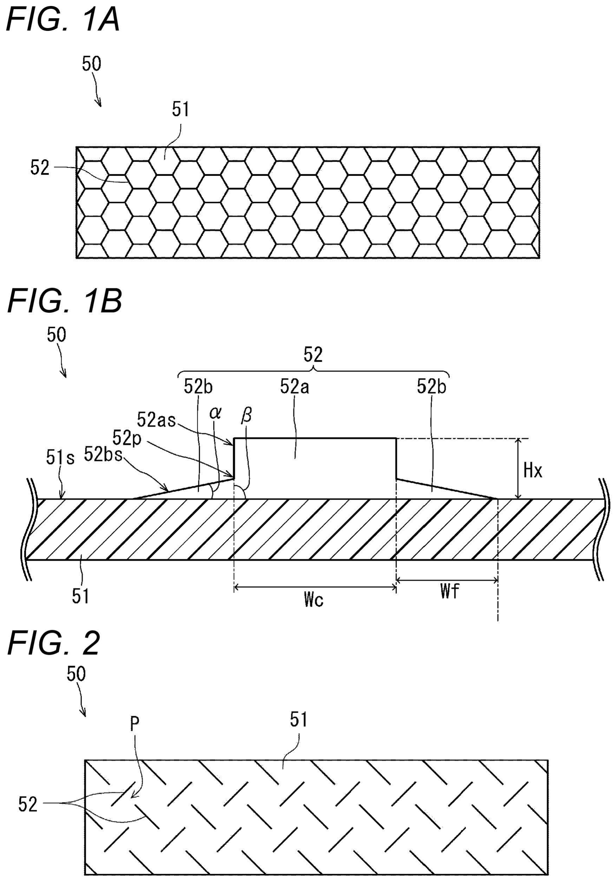

In Embodiment 1, one example of the separator (S) will be described. FIG. 1A shows a top view of a separator 50 according to Embodiment 1. The separator 50 includes a substrate 51 and a spacer 52 formed on the substrate 51. FIG. 1B shows a cross-sectional view of a portion of the separator 50 in which the spacer 52 is provided. In FIG. 1B, for the clarity of the drawing, the spacer 52 is not hatched. The cross section shown in FIG. 1B is a cross section taken along a direction perpendicular to a direction in which a linear protrusion 52a extends. As shown in FIG. 1B, the spacer 52 includes one linear protrusion 52a and two brim portions 52b provided on opposite sides of the protrusion 52a. As shown in FIG. 1A, the spacer 52 (including linear protrusions 52a) is formed in a honeycomb pattern. In FIG. 1B, the height of the protrusion 52a is indicated by Hx, the width of the protrusion 52a is indicated by Wc, and the width of each brim portion 52b is indicated by Wf.

The brim portions 52b are joined to an outer edge portion of the protrusion 52a and thinner than the protrusion 52a. The brim portions 52b have a tapered shape that becomes thinner as they get farther away from the protrusion 52a. An angle $\alpha$ formed by a surface 52bs of each brim portion 52b and a surface 51s of the substrate 51 is smaller than an angle $\beta$ formed by a side surface 52as of the protrusion 52a and the surface 51s of the substrate 51. An inflection point 52p at which the angle formed by the surface of the spacer 52 and the surface 51s of the substrate 51 changes significantly can be set as the boundary between the protrusion 52a and the brim portion 52b. When there is no clear inflection point 52p, a region in which the angle $\alpha$ is 45° or less can be set as a region for the brim portion 52b, and a region other than that region can be set as a region for the protrusion 52a.

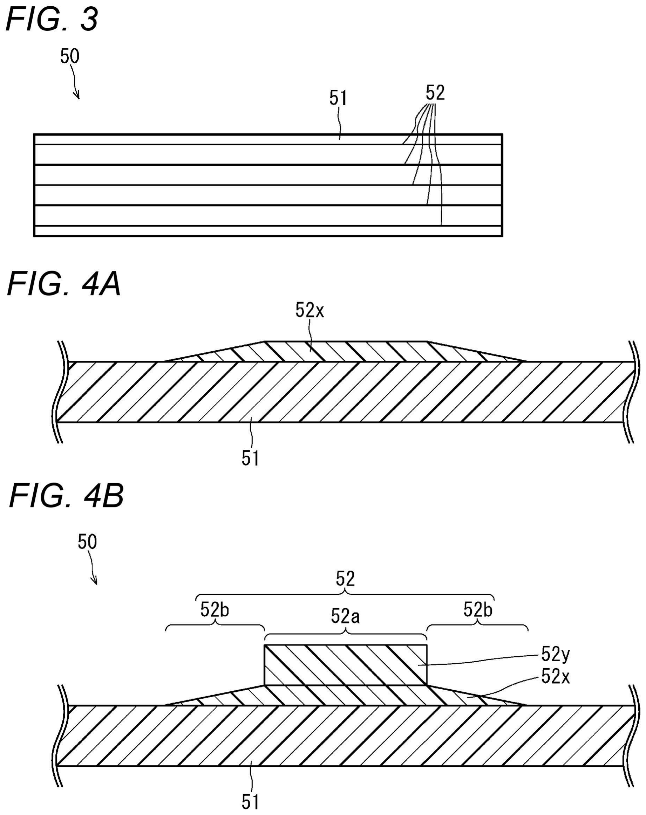

Another example of the arrangement of the spacer 52 (including protrusions 52a) is shown in FIGS. 2 and 3. In the arrangement shown in FIG. 2, a plurality of linear spacers 52 that are spaced apart from each other are formed on the substrate 51. A spacing P is provided between the linear spacers 52. In the arrangement shown in FIG. 3, a plurality of linear spacers 52 that are arranged in a stripe pattern are formed on the substrate 51.

One example of a method for forming the spacer 52 will be described. First, a first coating liquid is prepared by dispersing main materials (a resin, a filler, and the like) for forming the brim portions 52b in a liquid medium (a dispersion medium). There is no particular limitation on the liquid medium, and an organic solvent (N-methyl-2-pyrrolidone or the like) may be used. Next, a first layer 52x is formed on the substrate 51 as shown in FIG. 4A by thinly applying the first coating liquid to a region in which a protrusion 52a and brim portions 52b are to be formed. The shape of the brim portions 52b can be changed by adjusting the concentration of the first coating liquid or the like. For example, by thinly applying the first coating liquid, the brim portions 52b are likely to have a tapered shape.

Next, a second coating liquid is prepared by dispersing main materials (a resin, a filler, and the like) for forming the protrusion 52a in a liquid medium (a dispersion medium). There is no particular limitation on the liquid medium, and an organic solvent (N-methyl-2-pyrrolidone or the like) may be used. Next, a second layer 52y is formed on the first layer 52x as shown in FIG. 4B by thickly applying the second coating liquid to a region in which the protrusion 52a is to be formed, and then drying the second coating liquid. In the manner described above, the spacer 52 is formed. The protrusion 52a is constituted of the second layer 52y and a portion of the first layer 52x that is located immediately below the second layer 52y. The brim portions 52b are constituted of portions of the first layer 52x that are located not immediately below the second layer 52y.

The coating liquid may be applied using a dispenser or the like, or using a known printing method such as gravure printing, inkjet printing, or screen printing. Also, the coating liquid may be dried using a known method such as drying by heat or natural drying.

(Embodiment 2)

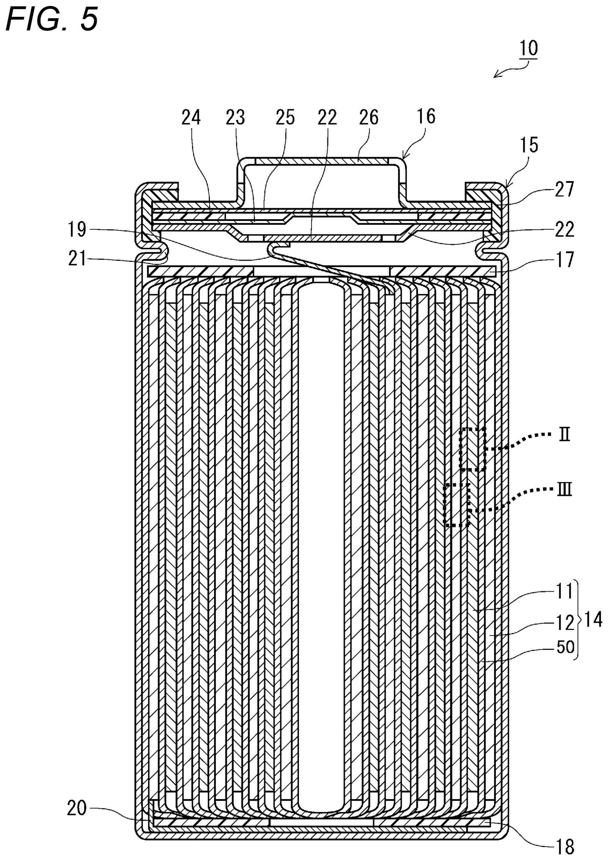

In Embodiment 2, as one example of the nonaqueous electrolyte secondary battery (B), an example of a lithium secondary battery will be described. FIG. 5 is a vertical cross-sectional view schematically showing a nonaqueous electrolyte secondary battery according to Embodiment 2. In FIG. 5, an illustration of the spacer and the space formed by the spacer is omitted.

A cylindrical secondary battery (a nonaqueous electrolyte secondary battery) 10 shown in FIG. 5 includes a cylindrical battery case, and a spirally-wound type electrode group 14 and a nonaqueous electrolyte (not shown) that are housed in the battery case. The battery case includes a case main body 15 that is a bottomed cylindrical metal container and a sealing member 16 that seals an opening of the case main body 15. A gasket 27 is provided between the case main body 15 and the sealing member 16. Due to the gasket 27, the air-tightness of the battery case is ensured. In the case main body 15, insulating plates 17 and 18 are respectively provided on opposite ends of the electrode group 14 in the winding axis direction of the electrode group 14.

The case main body 15 includes a narrow portion 21 formed by, for example, partially pressing the side wall of the case main body 15 from outside. The narrow portion 21 may be formed in an annular shape along the circumferential direction of the case main body 15 in the side wall of the case main body 15. In this case, the sealing member 16 is supported on a surface of the narrow portion 21 on the opening side.

The sealing member 16 includes a filter 22, a lower valve 23, an insulating member 24, an upper valve 25, and a cap 26. In the sealing member 16, these members are stacked in this order. The above-described members that constitute the sealing member 16 have, for example, a disc or ring shape. The lower valve 23 and the upper valve 25 are connected to each other at their center portions, with the insulating member 24 interposed between their peripheral edges. The filter 22 and the lower valve 23 are connected to each other at their peripheral edges. The upper valve 25 and the cap 26 are connected to each other at their peripheral edges. That is, the members excluding the insulating member 24 are electrically connected to each other.

Although not shown, the lower valve 23 includes a ventilation hole. Accordingly, if the internal pressure of the battery case increases due to overheating or the like, the upper valve 25 bulges toward the cap 26 and moves apart from the lower valve 23. The electric connection between the lower valve 23 and the upper valve 25 is thereby interrupted. If the internal pressure further increases, the upper valve 25 ruptures, and gas is released from an opening formed in the cap 26.

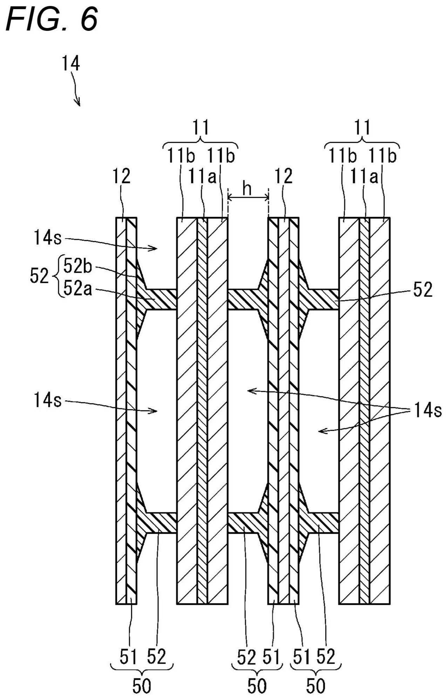

FIG. 6 is an enlarged view of a portion of the electrode group 14. FIG. 6 includes a portion near the positive electrode surrounded by a region **II** shown in FIG. 5 and a portion near the negative electrode surrounded by a region **III** shown in FIG. 5.

The electrode group 14 includes a positive electrode 11, a negative electrode 12, and a separator 50. The positive electrode 11, the negative electrode 12, and the separator 50 have a strip shape. The separator 50 is the separator described in Embodiment 1. The electrode group 14 is formed by spirally winding the positive electrode 11, the negative electrode 12, and the separator 50, with the separator 50 being provided between the positive electrode 11 and the negative electrode 12.

The positive electrode 11 includes a positive electrode current collector 11a and a positive electrode material mixture layer 11b. The positive electrode current collector 11a is electrically connected to the cap 26, which functions as a positive electrode terminal, via a positive electrode lead 19. In FIG. 6, as the negative electrode 12, a negative electrode (a negative electrode current collector) without deposition of a lithium metal is shown. The negative electrode 12 is electrically connected to the case main body 15, which functions as a negative electrode terminal, via a negative electrode lead 20.

In the example shown in FIG. 6, the spacer 52 is formed on one of two main surfaces of the substrate 51 that is on the positive electrode 11 side, but may be formed on the main surface of the substrate 51 that is on the negative electrode 12 side. Due to the spacer 52, a space 14s is formed between the positive electrode 11 and the negative electrode 12.

In a secondary battery 10, a lithium metal deposits on the negative electrode 12 during charging. In the case of the configuration shown in FIG. 6, due to the lithium metal depositing on the negative electrode 12, a portion of the substrate 51 without the protrusion 52a moves toward the space 14s side. Because the space 14s is formed between the positive electrode 11 and the negative electrode 12, the change in the volume of the electrode group 14 caused by deposition of the lithium metal is reduced, and thus the cycle characteristics are improved. The substrate 51 deforms significantly due to charging and discharging. However, the spacer 52 includes the brim portions 52b, damage to the substrate 51 caused by the spacer 52 can be reduced.

(Additional Statement)

The following techniques are disclosed based on the foregoing description.

[Technique 1]

A nonaqueous electrolyte secondary battery including:

a positive electrode;
a negative electrode;
a separator provided between the positive electrode and the negative electrode; and
a nonaqueous electrolyte,
wherein the negative electrode is a negative electrode in which a metal that contains at least one selected from the group consisting of lithium and sodium deposits during charging and dissolves during discharging,
the separator includes a substrate and a spacer formed on the substrate, and
the spacer includes a protrusion and a brim portion that is provided at an outer edge portion of the protrusion and thinner than the protrusion.

[Technique 2]

The nonaqueous electrolyte secondary battery in accordance with technique 1,
wherein the brim portion has a width Wf in a range of 1 $\mu$m to 40 $\mu$m.

[Technique 3]

The nonaqueous electrolyte secondary battery in accordance with technique 1 or 2,
wherein a ratio Wf/Wc of a width Wf of the brim portion relative to a width Wc of the protrusion is in a range of 0.001 to 0.4.

[Technique 4]

The nonaqueous electrolyte secondary battery in accordance with any one of techniques 1 to 3,
wherein the brim portion has an average height Hf in a range of 0.5 $\mu$m to 10 $\mu$m.

[Technique 5]

The nonaqueous electrolyte secondary battery in accordance with any one of techniques 1 to 4,
wherein a ratio Hf/Hc of an average height Hf of the brim portion relative to an average height Hc of the protrusion is in a range of 0.005 to 0.25.

[Technique 6]

The nonaqueous electrolyte secondary battery in accordance with any one of techniques 1 to 5,
wherein the brim portion becomes thinner as it gets farther away from the protrusion.

[Technique 7]

A separator for a nonaqueous electrolyte secondary battery including:

a substrate; and
a spacer formed on the substrate,
wherein the spacer includes a protrusion and a brim portion that is provided at an outer edge portion of the protrusion and thinner than the protrusion.

[Technique 8]

The separator in accordance with technique 7,
wherein the brim portion has a width in a range of 1 $\mu$m to 40 $\mu$m.

[Technique 9]

The separator in accordance with technique 7 or 8,
wherein a ratio Wf/Wc of a width Wf of the brim portion relative to a width Wc of the protrusion is in a range of 0.001 to 0.4.

[Technique 10]

The separator in accordance with any one of techniques 7 to 9,
wherein the brim portion has an average height in a range of 0.5 $\mu$m to 10 $\mu$m.

[Technique 11]

The separator in accordance with any one of techniques 7 to 10,
wherein a ratio Hf/Hc of an average height Hf of the brim portion relative to an average height Hc of the protrusion is in a range of 0.005 to 0.25.

[Technique 12]

The separator in accordance with any one of techniques 7 to 11,
wherein the brim portion becomes thinner as it gets farther away from the protrusion.

[Examples]

Hereinafter, the secondary battery (B) according to the present embodiment will be specifically described based on examples. In the examples given below, a plurality of lithium secondary batteries with different separators were produced and evaluated.

(Production of Separator SA1)

First, as a substrate layer, a polyethylene strip-shaped porous film (with an average thickness of 10 $\mu$m) was prepared. Next, a porous composite material layer (with an average thickness of 2 $\mu$m) was formed on one side of the substrate layer. The composite material layer was formed by forming a second layer and a first layer on the substrate layer in this order.

The second layer was formed in the manner described below. First, N-methyl-2-pyrrolidone (NMP) and calcium chloride were mixed at a mass ratio of 94.2:5.8. The obtained mixture was heated to about 80°C to completely dissolve the calcium chloride. Then, the solution was brought back to room temperature, and 2200 g of the solution was obtained. After that, 0.6 mol of paraphenylenediamine (PPD) was added and completely dissolved. In a state in which the solution was maintained at about 20°C, 0.6 mol of terephthalic acid dichloride (TPC) was added in portions. The obtained solution was aged at about 20°C for one hour to obtain a polymerization liquid. Next, 100 g of the polymerization liquid was mixed with a N-methyl-2-pyrrolidone solution in which 5.8 mass% of calcium chloride was dissolved to obtain a solution (a coating liquid) containing paraphenylene terephthalamide (PPTA), which is an aromatic polyamide (aramid), at a concentration of 2 mass%.

Next, the coating liquid was applied onto the substrate layer using a slot die method to form a coating film. Next, the substrate layer on which the coating film was formed was left in an atmosphere at a temperature of 25°C and a relative humidity of 70% for one hour to cause the aromatic polyamide to deposit. Next, the substrate layer was washed with water to remove the NMP and calcium chloride contained in the coating film. Next, the coating film was dried at 60°C for 5 minutes to form a second layer.

The first layer was formed in the manner described below. First, a mixture was obtained by mixing lithium phosphate ($Li_3PO_4$) particles and poly(N-vinyl acetamide) (PNVA) at a mass ratio of 100:8. As the lithium phosphate particles, lithium phosphate particles with a volume-based median particle size of 0.19 $\mu$m were used. Water (ion exchange water) was added to the obtained mixture and stirred to prepare a slurry (as a coating liquid) with a solid content concentration of 12 mass%. Next, the obtained slurry was applied onto the second layer through micro-gravure coating to form a coating film. Next, the coating film was dried in a drying furnace attached to the coating machine. In this way, a first layer was formed. Through the above-described processing, a composite material layer was formed.

Next, a spacer was formed in a honeycomb pattern as shown in FIG. 3 on the composite material layer. Specifically, first, as shown in FIG. 4A, a first layer 52x was formed on the composite material layer. Next, as shown in FIG. 4B, a second layer 52y was formed on the first layer 52x. At this time, each layer was formed such that the values of the average height Hc of the protrusion, the average height Hf of the brim portion, and the ratio Wf/Wc of the width Wf of the brim portion relative to the width Wc of the protrusion were as shown in Table 1. The width Wc of the protrusion was set to 500 $\mu$m. The first layer 52x and the second layer 52y were formed using a coating liquid containing a resin and alumina particles (as an inorganic filler). In this way, a separator SA1 including the spacer was formed.

(Production of Other Separators)

Separators SA2 to SA4 were each produced under the same condition and using the same method as those used to produce the separator SA1, except that the spacer was formed such that the value of the ratio Wf/Wc was as shown in Table 1. At this time, the width Wc of the protrusion was set to 500 $\mu$m, as with the separator SA1. Also, a separator SC1 was produced under the same condition and using the same method as those used to produce the separator SA1, except that the spacer was formed so as to include only protrusions without including brim portions.

(Battery A1)

A lithium secondary battery A1 was produced in the following procedure.

(1) Production of Positive Electrode

A lithium-containing transition metal oxide with a layered rock salt structure (NCA as a positive electrode active material) containing Li, Ni, Co, and Al (with the molar ratio of Li being 1.0 relative to the total amount of Ni, Co, and Al) was prepared. The lithium-containing transition metal oxide (NCA) was mixed with acetylene black (AB as a conductive material) and polyvinylidene fluoride (PVdF as a binder) at a mass ratio of NCA:AB:PVdF = 95:2.5:2.5. Furthermore, an appropriate amount of N-methyl-2-pyrrolidone (NMP) was added thereto, and the mixture was stirred to prepare a positive electrode material mixture slurry. Next, the obtained positive electrode material mixture slurry was applied to both sides of a strip-shaped Al foil (as a positive electrode current collector), and then dried. In this way, a positive electrode material mixture coating film was formed. Next, the coating film was rolled using a roller. A stacked body of the positive electrode current collector and the positive electrode material mixture obtained was finally cut into a predetermined size. In this way, a positive electrode including the positive electrode current collector and positive electrode material mixture layers formed on both sides of the positive electrode current collector was produced.

(2) Preparation of Negative Electrode

As a negative electrode, a strip-shaped copper foil (with a thickness of 12 $\mu$m) including rolled lithium metal layers (each with a thickness of 25 $\mu$m) formed on both sides of the strip-shaped copper foil was used.

(3) Preparation of Nonaqueous Electrolyte

Ethylene carbonate (EC) and dimethyl carbonate (DMC) were mixed at a volume ratio of EC and DMC = 30:70. $LiPF_6$ and $LiBF_2(C_2O_4)$ were dissolved in the obtained mixed solvent at a $LiPF_6$ concentration of 1 mol/L and $LiBF_2(C_2O_4)$ concentration of 0.1 mol/L to prepare a liquid nonaqueous electrolyte.

(4) Production of Battery

An aluminum tab was attached to the positive electrode obtained in the above-described manner. A nickel tab was attached to the negative electrode obtained in the above-described manner. The positive electrode and the negative electrode were spirally wound with the above-described separator SA1 interposed therebetween in an inert gas atmosphere to produce a spirally wound-type electrode group. At this time, the separator SA1 was placed such that the spacer was in contact with the negative electrode. In this way, a battery A1 was produced.

(Batteries A2 to A4, and C1)

Batteries A2 to A4, and C1 were each produced under the same condition and using the same method as those used to produce the battery A1, except that, instead of the separator SA1, one of the separators SA2 to SA4 and SC1 was used.
Each of the batteries produced in the above-described manner was subjected to a charging/discharging test. In the charging/discharging test, in a thermostatic chamber set at 25°C, each battery was charged under the following charging condition. After 20 minutes of resting, the battery was then discharged under the following discharging condition.

(Charging)

The battery was subjected to constant current charging at a current value per electrode unit area (in the unit of square centimeter) of 2.15 mA until the battery voltage reached 4.1 V, and thereafter subjected to constant voltage charging at a voltage of 4.1 V until the current value per electrode unit area reached 0.54 mA.

(Discharging)

The battery was subjected to constant current discharging at a current value per electrode unit area of 2.15 mA until the battery voltage reached 3.75 V.

(Capacity Retention Rate)

In the charging/discharging test described above, discharge capacity C(1) at the first cycle and discharge capacity C(200) at the 200th cycle were measured. Then, capacity retention rate was determined from the following equation.

$$\text{Capacity retention rate (\%)} = 100 \times C(200) / C(1)$$

(Air Permeability Resistance of Separator)

For each of the produced separators, air permeability resistance (Gurley second) was measured using the Gurley testing method.

The condition for forming the spacer is shown in Table 1 together with the evaluation results of the separators and the batteries. The air permeability resistance (Gurley second) shown in Table 1 is a relative value when the value of the separator SC1 is set to 100%. The higher the value of air permeability resistance, the lower the air permeability of the separator. The higher the capacity retention rate, the higher the cycle characteristics.

[Table 1]

| Battery | Separator | Spacer | | | | Capacity retention rate (%) |
| --- | --- | --- | --- | --- | --- | --- |
| | | Average height Hc of protrusion ($\mu$m) | Average height Hf of brim portion ($\mu$m) | Ratio Wf/Wc | Air permeability resistance (%) | |
| A1 | SA1 | 40 | 5 | 0.006 | 101 | 92 |
| A2 | SA2 | 40 | 5 | 0.02 | 101 | 92 |
| A3 | SA3 | 40 | 5 | 0.08 | 102 | 92 |
| A4 | SA4 | 40 | 5 | 0.12 | 104 | 90 |
| C1 | SC1 | 40 | 0 | 0 | 100 | 89 |

The batteries A1 to A4 correspond to secondary batteries (B) according to the present disclosure, and the battery C1 corresponds to a battery according to a comparative example. The batteries A1 to A4 exhibited a higher capacity retention rate than the capacity retention rate of the battery C1. This is considered to be due to the effect of forming the brim portions. A tendency was observed in which the capacity retention rate lowered as the value of the ratio Wf/Wc increased. This is considered to be because when the value of the ratio Wf/Wc increases, the air permeability of the separator decreases.

[Industrial Applicability]

The present disclosure is applicable to a nonaqueous electrolyte secondary battery and a separator for a nonaqueous electrolyte secondary battery.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

[Reference Signs List]

10: secondary battery (nonaqueous electrolyte secondary battery), 11: positive electrode, 11a: positive electrode current collector, 11b: positive electrode material mixture layer, 12: negative electrode, 14: electrode group, 14s: space, 50: separator, 51: substrate, 52: spacer, 52a: protrusion, 52b: brim portion

**Claims**

1. A nonaqueous electrolyte secondary battery comprising:

   a positive electrode;
   a negative electrode;
   a separator provided between the positive electrode and the negative electrode; and
   a nonaqueous electrolyte,
   wherein the negative electrode is a negative electrode in which a metal that contains at least one selected from the group consisting of lithium and sodium deposits during charging and dissolves during discharging,
   the separator includes a substrate and a spacer formed on the substrate, and the spacer includes a protrusion and a brim portion that is provided at an outer edge portion of the protrusion and thinner than the protrusion.

2. The nonaqueous electrolyte secondary battery in accordance with claim 1,
   wherein the brim portion has a width Wf in a range of 1 $\mu$m to 40 $\mu$m.

3. The nonaqueous electrolyte secondary battery in accordance with claim 1 or 2,
   wherein a ratio Wf/Wc of a width Wf of the brim portion relative to a width Wc of the protrusion is in a range of 0.001 to 0.4.

4. The nonaqueous electrolyte secondary battery in accordance with claim 1 or 2,
   wherein the brim portion has an average height Hf in a range of 0.5 $\mu$m to 10 $\mu$m.

5. The nonaqueous electrolyte secondary battery in accordance with claim 1 or 2,
   wherein a ratio Hf/Hc of an average height Hf of the brim portion relative to an average height Hc of the protrusion is in a range of 0.005 to 0.25.

6. The nonaqueous electrolyte secondary battery in accordance with claim 1 or 2,
   wherein the brim portion becomes thinner as it gets farther away from the protrusion.

7. A separator for a nonaqueous electrolyte secondary battery comprising:

   a substrate; and
   a spacer formed on the substrate,
   wherein the spacer includes a protrusion and a brim portion that is provided at an outer edge portion of the protrusion and thinner than the protrusion.

8. The separator in accordance with claim 7,
   wherein the brim portion has a width Wf in a range of 1 $\mu$m to 40 $\mu$m.

9. The separator in accordance with claim 7 or 8,
   wherein a ratio Wf/Wc of a width Wf of the brim portion relative to a width Wc of the protrusion is in a range of 0.001 to 0.4.

10. The separator in accordance with claim 7 or 8,
    wherein the brim portion has an average height Hf in a range of 0.5 $\mu$m to 10 $\mu$m.

11. The separator in accordance with claim 7 or 8,
    wherein a ratio Hf/Hc of an average height Hf of the brim portion relative to an average height Hc of the protrusion is in a range of 0.005 to 0.25.

12. The separator in accordance with claim 7 or 8,
    wherein the brim portion becomes thinner as it gets farther away from the protrusion.

*FIG. 1A*

50

51

52

*FIG. 1B*

50

52

52b    52a    52b

52as    α    β

52p

51s    52bs

Hx

51

Wc    Wf

*FIG. 2*

50

P    51

52

FIG. 3

FIG. 4A

FIG. 4B

*FIG. 5*

FIG. 6

# EP 4 700 964 A1

## INTERNATIONAL SEARCH REPORT

| International application No. |
|---|
| **PCT/JP2024/014396** |

**A. CLASSIFICATION OF SUBJECT MATTER**

***H01M 50/463***(2021.01)i; ***H01M 10/052***(2010.01)i
FI: H01M50/463 B; H01M10/052

According to International Patent Classification (IPC) or to both national classification and IPC

**B. FIELDS SEARCHED**

Minimum documentation searched (classification system followed by classification symbols)

H01M50/463; H01M10/052

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/224872 A1 (PANASONIC INTELLECTUAL PROPERTY MANAGEMENT CO., LTD.) 27 October 2022 (2022-10-27)<br>paragraphs [0043]-[0059], fig. 4 | 1-12 |
| A | JP 2013-137984 A (SONY CORPORATION) 11 July 2013 (2013-07-11)<br>all pages, all drawings | 1-12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

21

**INTERNATIONAL SEARCH REPORT**
Information on patent family members

International application No.

**PCT/JP2024/014396**

| Patent document cited in search report | | | Publication date (day/month/year) | Patent family member(s) | | | Publication date (day/month/year) |
|---|---|---|---|---|---|---|---|
| WO | 2022/224872 | A1 | 27 October 2022 | EP paragraphs [0043]-[0059], fig. 4 | 4329044 | A1 | |
| JP | 2013-137984 | A | 11 July 2013 | US | 2013/0059192 | A1 | |

Form PCT/ISA/210 (patent family annex) (July 2022)

**EP 4 700 964 A1**

**Patent documents cited in the description**

- JP 2020077497 A